# EUROPEAN PATENT SPECIFICATION

(11) **EP 2 858 336 B1**
(45) Date of publication and mention of the grant of the patent: **31.01.2018**
(21) Application number: 13797595.9
(22) Date of filing: 20.05.2013
(51) Int. Cl.: H04M 1/66, H04L 29/06, H04W 52/28, H04B 17/10

(54) **SYSTEM AND METHOD FOR PREVENTING MOBILE TERMINAL FROM ABNORMAL UPLOADING OF INFORMATION**
SYSTEM UND VERFAHREN ZUR VERHINDERUNG VON ANORMALEM HOCHLADEN VON INFORMATIONEN BEI EINEM MOBILEN ENDGERÄT
SYSTÈME ET PROCÉDÉ POUR EMPÊCHER LE TÉLÉVERSEMENT ANORMAL D'INFORMATIONS PAR UN TERMINAL MOBILE

(30) Priority: 01.06.2012 CN 201210178879
(43) Date of publication of application: 08.04.2015
(73) Proprietor: ZTE Corporation, Guangdong Province 518057 (CN)
(72) Inventor: LI, Huan, Shenzhen City Guangdong Province 518057 (CN)
(74) Representative: Murgitroyd & Company
(86) International application number: PCT/CN2013/075891
(87) International publication number: WO 2013/178022

(56) References cited:
- EP-A1- 2 141 898
- WO-A1-2006/028558
- WO-A2-2010/141826
- CN-A- 102 158 597
- CN-A- 102 244 858
- JP-A- 2010 219 707

## Description

### Technical Field

The present invention relates to the field of communication, and more particularly, to a system and method for preventing a mobile terminal from uploading information abnormally.

### Background of the Related Art

The development of mobile phone industry and the growing popularity of mobile Internet hasten the birth of all types of mobile phone applications, and with the development of 3G (3rd Generation) technology and the arrival of the 4G (4th Generation) era, the significant enhancement of technical support is bound to lead to rapid growth of the mobile phone application industry. Currently, almost all of the traditional Internet applications can be ported to the mobile Internet, and the development of technology has brought new applications and is also accompanied with new security risks. At present, the development of smart phones makes the applications in the mobile phone increasingly enriched and even there is a trend of exceeding the computer terminal applications, and a variety of information security problems in the traditional Internet is gradually extended to the field of mobile Internet, and even evolved into new security threats: spam messages flooded, short message fraud repeated, mobile phone viruses and other malicious programs to pose a threat on personal privacy, financial information and even corporate commercial secrets, and it is common that the mobile phone users suffer economic loss and even reputation loss.

With the gradual increase of popularity of smartphone, the completeness of 3G network as well as the formation of mobile phone users' surfing habit, the mobile phone security applications will be an important application of mobile phones in the future, and the information security of mobile phone is bound to become the focus of research in the field of information security.

WO 2006/028558 A1 provides device and method for detecting software attacks by monitoring electronic power consumption pattern. In a first embodiment, software attacks are detected by an increase in power consumption. The increased power consumption can be caused by increased network traffic, or by increased activity in the microprocessor. Monitoring power consumption is particularly effective for detecting DOS/flooding attacks when the electronic device is in an idle state. In a second embodiment, a power consumption signal is converted to the frequency domain (e.g., by fast Fourier transform). The highest amplitude frequencies are identified. Specific software attacks produce characteristic frequencies in the power consumption signal. Software attacks are therefore detected by matching the highest amplitude frequencies with frequencies associated with specific worms and viruses. Identification of a particular software attack typically requires matching of 3 or more of the highest amplitude frequencies, and, optionally, amplitude information.

### Summary of the Invention

The embodiment of the present invention provides a system and method for preventing a mobile terminal from uploading information abnormally, to overcome abnormal leakage of user information and improve the security of user information in the mobile terminal.

The features of the system and method according to the present invention are defined in the independent claims, and the preferable features according to the present invention are defined in the dependent claims.

The embodiment of the present invention provides a system for preventing a mobile terminal from uploading information abnormally, comprising: a real-time monitoring module, a comparing module and a software prompting module, wherein:
the real-time monitoring module is configured to: monitor a standby state of the mobile terminal and a transmission power in the standby state in real time, and notify the comparing module of the standby state and the transmission power in the standby state;
the comparing module is configured to: after receiving a notification from the real-time monitoring module, compare the transmission power of the mobile terminal in the standby state with a transmission power of the mobile terminal in a theoretical standby state, and notify the software prompting module of a comparison result; and
the software prompting module is configured to: when the comparison result is that the transmission power of the mobile terminal in the standby state is greater than the transmission power of the mobile terminal in the theoretical standby state, prompt a user that there is a risk of malicious information leakage in a current state.

The real-time monitoring module is configured to monitor a standby state of the mobile terminal and a transmission power in the standby state in real time in a following way:
monitoring a working state of each channel of the mobile terminal in real time, determining whether the mobile terminal is in the standby state or not according to the working state of each channel, and calculating the transmission power of the mobile terminal in the standby state when the mobile terminal is in the standby state.

The system further comprises a memory module, respectively connected with the real-time monitoring module and the comparing module, wherein:
the real-time monitoring module is further configured to: notify the memory module of the standby state;
the memory module is configured to: after receiving a notification from the real-time monitoring module, send the transmission power of the mobile terminal in the theoretical standby state saved in the memory module to the comparing module; and
the comparing module is further configured to: receive the transmission power of the mobile terminal in the theoretical standby state sent by the memory module, and compare the transmission power of the mobile terminal in the standby state with the transmission power of the mobile terminal in the theoretical standby state.

The software prompting module is further configured to: when the comparison result is that the transmission power of the mobile terminal in the standby state is less than or equal to the transmission power of the mobile terminal in the theoretical standby state provided by the memory module, not prompt a user that there is a danger of malicious information leakage in the current state.

The real-time monitoring module comprises: a channel monitoring unit, a register, a standby state judging unit, a power calculating unit and a transmitting unit, wherein:
the channel monitoring unit is configured to: monitor the working state of each channel of the mobile terminal in real time, and save the working state of each channel of the mobile terminal in the register;
the register is configured to: save the working state of each channel of the mobile terminal sent by the channel monitoring unit;
the standby state judging unit is configured to: read the working state of each channel of the mobile terminal in the register, and determine whether the mobile terminal is in the standby state or not according to the working state of each channel;
the power calculating unit is configured to: when the standby state judging unit determines that the mobile terminal is in the standby state, calculate the transmission power of the mobile terminal in the standby state; and
the transmitting unit is configured to: notify the comparing module and memory module of the standby state of the mobile terminal, and send the transmission power of the mobile terminal in the standby state to the comparing module.

The embodiment of the present invention further provides a method for preventing a mobile terminal from uploading information abnormally, comprising:
monitoring a standby state of the mobile terminal and a transmission power in the standby state in real time, when the mobile terminal is in the standby state, comparing the transmission power of the mobile terminal in the standby state with a transmission power of the mobile terminal in a theoretical standby state, when the transmission power of the mobile terminal in the standby state is greater than the transmission power of the mobile terminal in the theoretical standby state, prompting a user that there is a danger of malicious message leakage in a current state.

The step of monitoring the standby state of the mobile terminal and the transmission power in the standby state in real time comprises:
monitoring a working state of each channel of the mobile terminal in real time, determining whether the mobile terminal is in the standby state or not according to the working state of each channel, and calculating out the transmission power of the mobile terminal in the standby state when the mobile terminal is in the standby state.

The method further comprises:
when the transmission power of the mobile terminal in the standby state is less than or equal to the transmission power of the mobile terminal in the theoretical standby state, not prompting the user that there is a danger of malicious information leakage in the current state.

With the system and method for preventing a mobile terminal from uploading information abnormally provided in the embodiment of the present invention, the accuracy of judgment is high, which not only protects the security of user information, but also does not cause inconvenience to the user because of frequently popping-up the prompt box, and the abnormal leakage of user information is overcome to a great degree, thereby improving the security of user information in the mobile terminal, enabling the users to enjoy the enormous convenience brought by the mobile terminal to our lives, without fear of an attack from the rear.

### Brief Description of the Drawings

FIG. 1 is a structural diagram of a system for preventing a mobile terminal from uploading information abnormally in an embodiment;
FIG. 2 is a structural diagram of a real-time monitoring module in a first application example;
FIG. 3 is a structural diagram of a memory module in a second application example;
FIG. 4 is a flow chart of a method for preventing a mobile terminal from uploading information abnormally in an embodiment.

### Preferred Embodiments of the Invention

Hereinafter in conjunction with the accompanying drawings, the embodiments of the present invention will be described in detail. It should be noted that, in the case of no conflict, the embodiments of the present application and features in the embodiments may be arbitrarily combined with each other.

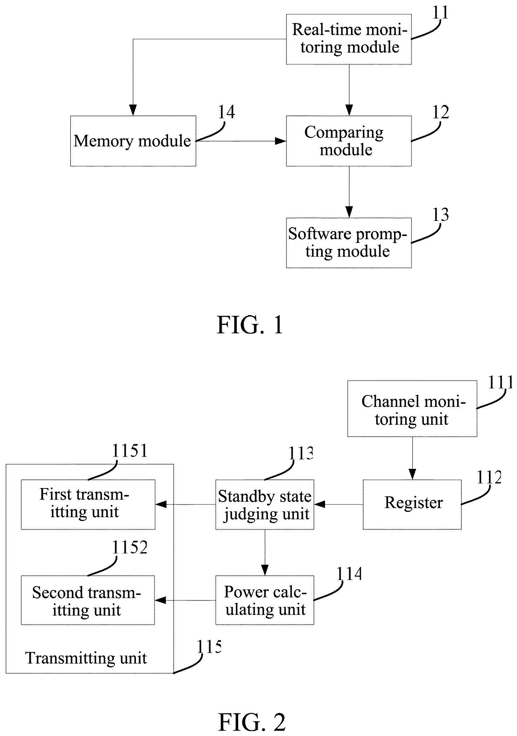

As shown in FIG. 1, the present embodiment provides a system for preventing a mobile terminal from uploading information abnormally, comprising: real-time monitoring module 11, comparing module 12 and software prompting module 13, wherein:
the real-time monitoring module 11 is configured to: monitor a standby state of the mobile terminal and transmission power in the standby state in real time, and notify the comparing module 12 of the standby state and the transmission power in the standby state;
the comparing module 12 is configured to: after receiving the notification from the real-time monitoring module 11, compare the transmission power of the mobile terminal in the standby state with the transmission power of the mobile terminal in the theoretical standby state, and notify the software prompting module 13 of the comparison result; and
the software prompting module 13 is configured to: when the comparison result is that the transmission power of the mobile terminal in the standby state is greater than the transmission power of the mobile terminal in the theoretical standby state, prompt the user that there is a risk of malicious information leakage in the current state.

In addition, the system further comprises a memory module 14 respectively connected with the real-time monitoring module 11 and the comparing module 12, wherein:
the real-time monitoring module 11 is further configured to: notify the memory module 14 of the standby state;
the memory module 14 is configured to: after receiving the notification from the real-time monitoring module 11, send the transmission power of the mobile terminal in the theoretical standby state saved by itself to the comparing module 12;
the comparing module 12 is further configured to: receive the transmission power of the mobile terminal in the theoretical standby state sent by the memory module 14, and compare the transmission power of the mobile terminal in the standby state with the transmission power of the mobile terminal in the theoretical standby state.

The real-time monitoring module 11 is configured to monitor the standby state of the mobile terminal and the transmission power in the standby state in real time in the following way:
monitoring the working state of each channel of the mobile terminal in real time, determining whether the mobile terminal is in the standby state or not according to the working state of each channel, and calculating out the transmission power of the mobile terminal in the standby state when the mobile terminal is in the standby state.

### The first application example

In the first application example, as shown in FIG. 2, the real-time monitoring module 11 comprises: a channel monitoring unit 111, a register 112, a standby state judging unit 113, a power calculating unit 114 and a transmitting unit 115, wherein:
the channel monitoring unit 111 is configured to: monitor the working state of each channel of the mobile terminal in real time, and save the working state of each channel of the mobile terminal in the register 112;
the register 112 is configured to: save the working state of each channel of the mobile terminal sent by the channel monitoring unit 111;
the standby state judging unit 113 is configured to: read the working state of each channel of the mobile terminal in the register 112, and determine whether the mobile terminal is in the standby state or not according to the working state of each channel;
the power calculating unit 114 is configured to: when the standby state judging unit 113 determines that the mobile terminal is in the standby state, calculate the transmission power of the mobile terminal in the standby state; and
the transmitting unit 115 is configured to: notify the comparing module 12 and memory module 14 of the standby state of the mobile terminal, and send the transmission power of the mobile terminal in the standby state to the comparing module 12.

As an alternative, the transmitting unit 115 further comprises a first transmitting unit 1151 and a second transmitting unit 1152, wherein:
the first transmitting unit 1151 is configured to: notify the memory module 14 of the standby state of the mobile terminal;
the second transmitting unit 1152 is configured to: notify the comparing module 12 of the standby state of the mobile terminal and the transmission power in the standby state.

### The second application example

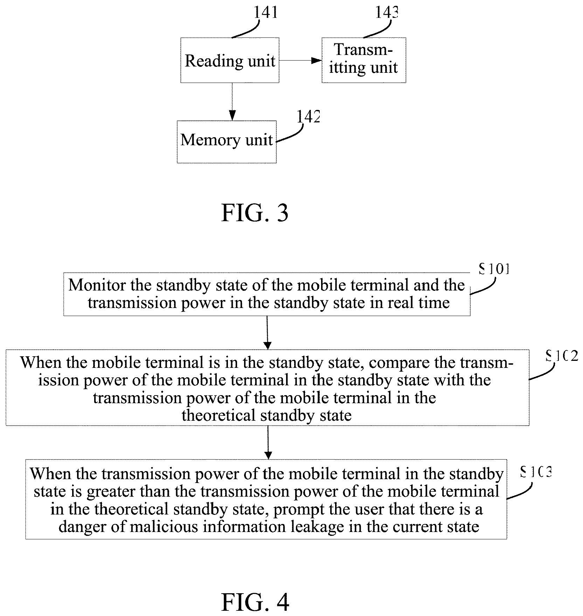

In the second application example, as shown in FIG. 3, the memory module 14 comprises: a reading unit 141, a memory unit 142 and a transmitting unit 143, wherein:
the reading unit 141 is configured to: after receiving the standby state of the mobile terminal sent by the real-time monitoring module 11, read the transmission power of the mobile terminal in the theoretical standby state saved in the memory unit 142, and transmit the transmission power of the mobile terminal in the theoretical standby state to the transmitting unit 143;
the transmitting unit 143 is configured to: send the transmission power of the mobile terminal in the theoretical standby state to the comparing module 12.

In addition, the software prompting module 13 is further configured to: when the comparison result is that the transmission power of the mobile terminal in the standby state is less than or equal to the transmission power of the mobile terminal in the theoretical standby state provided by the memory module 14, not prompt the user that there is a danger of malicious information leakage in the current state.

In an application example, for example: if the mobile phone is on standby in the Wideband Code Division Multiple Access (WCDMA) network, it needs to constantly monitor the Primary Common Control Physical Channel (P-CCPCH), in which some cell overhead information is often sent such as which states are changed, and meanwhile, the mobile phone also monitors the paging indicator channel (PICH) which can tell the mobile phone whether there is a paging message for this mobile phone in the secondary common control physical channel (S-CCPCH) or not. The related channels during the standby comprise: P-CCPCH, which is used to carry the downlink system control and broadcast information, wherein the content of the information is transmitting the cell system message; PICH: belonging to the downlink common indicator channel which is used to provide a paging indicator to the mobile phone and notify the user equipment (UE) to receive paging information in the S-CCPCH; physical random access channel (PRACH) which is used to send specific access request information to a base station; and dedicated physical channel (DPCH) which comprises a dedicated physical control channel (DPCCH) and a dedicated physical data channel (DPDCH), wherein the UE performs registration or location update in the dedicated physical channel.

The real-time monitoring module 11 in the first application example can monitor the working state of each channel in real time and determine whether the mobile phone is in the standby state or not according to the working state of each channel, and the memory module 14 saves the theoretical power value of the mobile phone in the standby state at the factory stage of the mobile phone (the minimum transmission power value of the WCDMA is required to be less than -50dBm in the 3rd Generation Partnership Project (3GPP), but it is generally less than a certain value (such as -55dBm) according to the testing result at the research and development stage, then the upper limit of the standby power value can be set as -55dBm), and after determining that the mobile phone is in the standby state by monitoring the channels, if the actual transmission power of the mobile phone in the current standby state is greater than -55dBm, it can be determined that there is an abnormally large power when the mobile phone is in the standby state, possibly uploading abnormal information, and the software prompting module 13 calls a software program, and the software pops up a prompt box to prompt the user that the transmission power of the mobile phone is abnormal in the current state and prompt the user to take measures to protect the information of the mobile phone from being leaked.

As shown in FIG. 4, the present embodiment provides a method for preventing the mobile terminal from uploading information abnormally, and the method comprises the following steps.

S101: the standby state of the mobile terminal and the transmission power in the standby state are monitored in real time.

The working state of each channel of the mobile terminal is monitored in real time, and it is determined whether the mobile terminal is in the standby state or not according to the working state of each channel, and the transmission power of the mobile terminal in the standby state is calculated when the mobile terminal is in the standby state.

S102: When the mobile terminal is in the standby state, the transmission power of the mobile terminal in the standby state is compared with the transmission power of the mobile terminal in the theoretical standby state.

S103: When the transmission power of the mobile terminal in the standby state is greater than the transmission power of the mobile terminal in the theoretical standby state, the user is prompted that there is a danger of malicious information leakage in the current state.

In addition, when the transmission power of the mobile terminal in the standby state is less than or equal to the transmission power of the mobile terminal in the theoretical standby state provided by the memory module, the user is not prompted that there is the danger of malicious information leakage in the current state.

In the related art, the 360 mobile phone security guard is relatively prevalent in preventing the mobile terminal from abnormal uploading of information, and it is realized by encrypting the information, that is, if the information of the mobile phone is leaked, especially the information is leaked in an encrypted mode, that is to say, if the password is cracked after the leakage, the information is leaked similarly, and generally the security level of the password set by the user is not high and the password is easy to be cracked. However, it can be seen from the abovementioned embodiments that, with respect to the related art, the system and method for preventing a mobile terminal from abnormal uploading of information provided in the abovementioned embodiment can prevent the leakage of information at the terminal side by considering the information security from a hardware perspective, in another word, if the information in the mobile phone will not be transmitted unless it has been confirmed, so as to solve the problem of the leakage of information from the source, which is more convenient and more secure. Meanwhile, not only the security of user information is protected, but also the inconvenience to the user caused by frequently popping up the prompt box can be avoided, and the abnormal leakage of user information can be overcome to a great degree, thereby improving the security of user information in the mobile terminal, enabling the users to enjoy the enormous convenience brought by the mobile terminal to our lives, without fear of an attack from the rear.

Those ordinarily skilled in the art can understand that all or some of steps of the abovementioned method may be completed by the programs instructing the relevant hardware, and the programs may be stored in a computer-readable storage medium, such as read only memory, magnetic or optical disk. Alternatively, all or some of the steps of the abovementioned embodiments may also be implemented by using one or more integrated circuits. Accordingly, each module/unit in the abovementioned embodiments may be realized in a form of hardware, or in a form of software function modules. The present invention is not limited to any specific form of hardware and software combinations.

The above description is only preferred embodiments of the present invention and not intended to limit the protection scope of the present invention. According to the inventive contents of the present invention, there may also have a variety of other embodiments, and a person skilled in the art can make various corresponding changes and modifications according to the embodiment of present invention.

### Industrial Applicability

With the system and method for preventing a mobile terminal from uploading information abnormally provided in the embodiment of the present invention, the accuracy of judgment is high, which not only protects the security of user information, but also does not cause inconvenience to the user because of frequently popping-up the prompt box, and the abnormal leakage of user information is overcome to a great degree, thereby improving the security of user information in the mobile terminal, enabling the users to enjoy the enormous convenience brought by the mobile terminal to our lives, without fear of an attack from the rear.

## Claims

1. A system for preventing a mobile terminal from uploading information abnormally, comprising: a real-time monitoring module (11), a comparing module (12) and a software prompting module (13), wherein:
the real-time monitoring module (11) is configured to: monitor a standby state of the mobile terminal and a transmission power in the standby state in real time, and notify the comparing module (12) of the standby state and the transmission power in the standby state;
the comparing module (12) is configured to: after receiving a notification from the real-time monitoring module (11), compare the transmission power of the mobile terminal in the standby state with a transmission power of the mobile terminal in a theoretical standby state, and notify the software prompting module (13) of a comparison result; and
the software prompting module (13) is configured to: when the comparison result is that the transmission power of the mobile terminal in the standby state is greater than the transmission power of the mobile terminal in the theoretical standby state, prompt a user that there is a risk of malicious information leakage in a current state;
wherein,
the real-time monitoring module (11) comprises: a channel monitoring unit (111), a register (112), a standby state judging unit (113), a power calculating unit (114) and a transmitting unit (115), wherein:
the channel monitoring unit (111) is configured to: monitor a working state of each channel of the mobile terminal in real time, and save the working state of each channel of the mobile terminal in the register (112);
the register (112) is configured to: save the working state of each channel of the mobile terminal sent by the channel monitoring unit;
the standby state judging unit (113) is configured to: read the working state of each channel of the mobile terminal in the register (112), and determine whether the mobile terminal is in the standby state or not according to the working state of each channel;
the power calculating unit (114) is configured to: when the standby state judging unit (113) determines that the mobile terminal is in the standby state, calculate the transmission power of the mobile terminal in the standby state; the transmitting unit (115) is configured to: notify the comparing module (12) and the memory module (14) of the standby state of the mobile terminal, and send the transmission power of the mobile terminal in the standby state to the comparing module (14); and the mobile terminal is a wideband code division multiple Access, WCDMA mobile terminal.

2. The system of claim 1, wherein:
the real-time monitoring module (11) is configured to monitor a standby state of the mobile terminal and a transmission power in the standby state in real time in a following way:
monitoring a working state of each channel of the mobile terminal in real time, determining whether the mobile terminal is in the standby state or not according to the working state of each channel, and calculating out the transmission power of the mobile terminal in the standby state when the mobile terminal is in the standby state.

3. The system of claim 1, further comprising a memory module (14) respectively connected with the real-time monitoring module (11) and the comparing module (12), wherein:
the real-time monitoring module (12) is further configured to: notify the memory module of the standby state;
the memory module (14) is configured to: after receiving a notification from the real-time monitoring module(11), send the transmission power of the mobile terminal in the theoretical standby state saved by the memory module (14) to the comparing module (12); and
the comparing module (12) is further configured to: receive the transmission power of the mobile terminal in the theoretical standby state sent by the memory module (14), and compare the transmission power of the mobile terminal in the standby state with the transmission power of the mobile terminal in the theoretical standby state.

4. The system of claim 1, wherein:
the software prompting module (11) is further configured to: when the comparison result is that the transmission power of the mobile terminal in the standby state is less than or equal to the transmission power of the mobile terminal in the theoretical standby state provided by the memory module (14), not prompt a user that there is a danger of malicious information leakage in the current state.

5. A method for preventing a mobile terminal from uploading information abnormally, comprising:
monitoring a standby state of the mobile terminal and a transmission power in the standby state in real time (S101), when the mobile terminal is in the standby state, comparing the transmission power of the mobile terminal in the standby state with a transmission power of the mobile terminal in a theoretical standby state (S102), when the transmission power of the mobile terminal in the standby state is greater than the transmission power of the mobile terminal in the theoretical standby state, prompting a user that there is a danger of malicious message leakage in a current state (S103);
wherein:
the step of monitoring the standby state of the mobile terminal and the transmission power in the standby state in real time comprises:
monitoring a working state of each channel of the mobile terminal in real time, determining whether the mobile terminal is in the standby state or not according to the working state of each channel, and calculating out the transmission power of the mobile terminal in the standby state when the mobile terminal is in the standby state; and the mobile terminal is a wideband code division multiple Access, WCDMA mobile terminal.

6. The method of claim 5, further comprising:
when the transmission power of the mobile terminal in the standby state is less than or equal to the transmission power of the mobile terminal in the theoretical standby state, not prompting a user that there is a danger of malicious information leakage in the current state.

## Patentansprüche

1. Ein System zum Verhindern des anormalen Hochladens von Informationen durch ein mobiles Endgerät, beinhaltend: ein Echtzeit-Überwachungsmodul (11), ein Vergleichsmodul (12) und ein Softwareinformiermodul (13), wobei:
das Echtzeit-Überwachungsmodul (11) für Folgendes konfiguriert ist: Überwachen eines Standby-Zustands des mobilen Endgeräts und einer Übertragungsleistung in dem Standby-Zustand in Echtzeit und Benachrichtigen des Vergleichsmoduls (12) über den Standby-Zustand und die Übertragungsleistung in dem Standby-Zustand;
das Vergleichsmodul (12) für Folgendes konfiguriert ist: nach dem Erhalten einer Benachrichtigung von dem Echtzeit-Überwachungsmodul (11), Vergleichen der Übertragungsleistung des mobilen Endgeräts in dem Standby-Zustand mit einer Übertragungsleistung des mobilen Endgeräts in einem theoretischen Standby-Zustand und Benachrichtigen des Softwareinformiermoduls (13) über ein Vergleichsergebnis; und
das Softwareinformiermodul (13) für Folgendes konfiguriert ist: wenn das Vergleichsergebnis lautet, dass die Übertragungsleistung des mobilen Endgeräts in dem Standby-Zustand höher als die Übertragungsleistung des mobilen Endgeräts in dem theoretischen Standby-Zustand ist, Informieren eines Benutzers darüber, dass in einem gegenwärtigen Zustand ein Risiko eines schädlichen Informationslecks besteht; wobei
das Echtzeit-Überwachungsmodul (11) Folgendes beinhaltet: eine Kanalüberwachungseinheit (111), ein Register (112), eine Standby-Zustand-Beurteilungseinheit (113), eine Leistungsberechnungseinheit (114) und eine Übertragungseinheit (115), wobei:
die Kanalüberwachungseinheit (111) für Folgendes konfiguriert ist: Überwachen eines Arbeitszustands jedes Kanals des mobilen Endgeräts in Echtzeit und Speichern des Arbeitszustands jedes Kanals des mobilen Endgeräts in dem Register (112);
das Register (112) für Folgendes konfiguriert ist: Speichern des von der Kanalüberwachungseinheit gesendeten Arbeitszustands jedes Kanals des mobilen Endgeräts;
die Standby-Zustand-Beurteilungseinheit (113) für Folgendes konfiguriert ist: Lesen des Arbeitszustands jedes Kanals des mobilen Endgeräts in dem Register (112) und Bestimmen gemäß dem Arbeitszustand jedes Kanals, ob sich das mobile Endgerät in dem Standby-Zustand befindet oder nicht;
die Leistungsberechnungseinheit (114) für Folgendes konfiguriert ist: wenn die Standby-Zustand-Beurteilungseinheit (113) bestimmt, dass sich das mobile Endgerät in dem Standby-Zustand befindet, Berechnen der Übertragungsleistung des mobilen Endgeräts in dem Standby-Zustand; die Übertragungseinheit (115) für Folgendes konfiguriert ist: Benachrichtigen des Vergleichsmoduls (12) und des Speichermoduls (14) über den Standby-Zustand des mobilen Endgeräts und Senden der Übertragungsleistung des mobilen Endgeräts in dem Standby-Zustand an das Vergleichsmoduls (14); und das mobile Endgerät ein mobiles Breitband-CDMA-Endgerät (CDMA = Codemultiplex-Vielfachzugriff) ist.

2. System gemäß Anspruch 1, wobei:
das Echtzeit-Überwachungsmodul (11) zum Überwachen eines Standby-Zustands des mobilen Endgeräts und einer Übertragungsleistung in dem Standby-Zustand in Echtzeit auf folgende Weise konfiguriert ist:
Überwachen eines Arbeitszustands jedes Kanals des mobilen Endgeräts in Echtzeit, Bestimmen gemäß dem Arbeitszustand jedes Kanals, ob sich das mobile Endgerät in dem Standby-Zustand befindet oder nicht, und Berechnen der Übertragungsleistung des mobilen Endgeräts in dem Standby-Zustand, wenn sich das mobile Endgerät in dem Standby-Zustand befindet.

3. System gemäß Anspruch 1, ferner beinhaltend ein Speichermodul (14), das jeweils mit dem Echtzeit-Überwachungsmodul (11) und dem Vergleichsmodul (12) verbunden ist, wobei:
das Echtzeit-Überwachungsmodul (12) ferner für Folgendes konfiguriert ist:
Benachrichtigen des Speichermoduls über den Standby-Zustand;
das Speichermodul (14) für Folgendes konfiguriert ist: Nach dem Erhalten einer Benachrichtigung von dem Echtzeit-Überwachungsmodul (11), Senden der Übertragungsleistung des mobilen Endgeräts in dem theoretischen Standby-Zustand, gespeichert von dem Speichermodul (14), an das Vergleichsmoduls (12); und
das Vergleichsmodul (12) ferner für Folgendes konfiguriert ist: Empfangen der Übertragungsleistung des mobilen Endgeräts in dem theoretischen Standby-Zustand, gesendet von dem Speichermodul (14), und Vergleichen der Übertragungsleistung des mobilen Endgeräts in dem Standby-Zustand mit der Übertragungsleistung des mobilen Endgeräts in dem theoretischen Standby-Zustand.

4. System gemäß Anspruch 1, wobei:
das Softwareinformiermodul (11) ferner für Folgendes konfiguriert ist: wenn das Vergleichsergebnis lautet, dass die Übertragungsleistung des mobilen Endgeräts in dem Standby-Zustand geringer als oder gleich der Übertragungsleistung des mobilen Endgeräts in dem theoretischen Standby-Zustand, bereitgestellt von dem Speichermodul (14), ist, nicht Informieren eines Benutzers darüber, dass in dem gegenwärtigen Zustand eine Gefahr eines schädlichen Informationslecks besteht.

5. Ein Verfahren zum Verhindern des anormalen Hochladens von Informationen durch ein mobiles Endgerät, beinhaltend:
Überwachen eines Standby-Zustands des mobilen Endgeräts und einer Übertragungsleistung in dem Standby-Zustand in Echtzeit (S101), wenn sich das mobile Endgerät in dem Standby-Zustand befindet, Vergleichen der Übertragungsleistung des mobilen Endgeräts in dem Standby-Zustand mit einer Übertragungsleitung des mobilen Endgeräts in einem theoretischen Standby-Zustand (S102), wenn die Übertragungsleistung des mobilen Endgeräts in dem Standby-Zustand größer als die Übertragungsleistung des mobilen Endgeräts in dem theoretischen Standby-Zustand ist, Informieren eines Benutzers darüber, dass in einem gegenwärtigen Zustand eine Gefahr eines schädlichen Nachrichtenlecks besteht (S103);
wobei:
der Schritt des Überwachens des Standby-Zustands des mobilen Endgeräts und der Übertragungsleistung in dem Standby-Zustand in Echtzeit Folgendes beinhaltet:
Überwachen eines Arbeitszustands jedes Kanals des mobilen Endgeräts in Echtzeit, Bestimmen gemäß dem Arbeitszustand jedes Kanals, ob sich das mobile Endgerät in dem Standby-Zustand befindet oder nicht, und Berechnen der Übertragungsleistung des mobilen Endgeräts in dem Standby-Zustand, wenn sich das mobile Endgerät in dem Standby-Zustand befindet; und das mobile Endgerät ein mobiles Breitband-CDMA-Endgerät ist.

6. Verfahren gemäß Anspruch 5, ferner beinhaltend:
wenn die Übertragungsleistung des mobilen Endgeräts in dem Standby-Zustand geringer als oder gleich der Übertragungsleistung des mobilen Endgeräts in dem theoretischen Standby-Zustand ist, nicht Informieren eines Benutzers darüber, dass in dem gegenwärtigen Zustand eine Gefahr eines schädlichen Informationslecks besteht.

## Revendications

1. Un système pour empêcher un terminal mobile de télécharger anormalement vers l'amont des informations, comprenant : un module de surveillance en temps réel (11), un module de comparaison (12) et un module d'avertissement de logiciel (13), dans lequel :
le module de surveillance en temps réel (11) est configuré pour : surveiller un état de mise en veille du terminal mobile et une puissance d'émission dans l'état de mise en veille en temps réel, et notifier le module de comparaison (12) de l'état de mise en veille et de la puissance d'émission dans l'état de mise en veille ;
le module de comparaison (12) est configuré pour : après réception d'une notification provenant du module de surveillance en temps réel (11), comparer la puissance d'émission du terminal mobile dans l'état de mise en veille avec une puissance d'émission du terminal mobile dans un état de mise en veille théorique, et notifier le module d'avertissement de logiciel (13) d'un résultat de comparaison ; et
le module d'avertissement de logiciel (13) est configuré pour : lorsque le résultat de comparaison est que la puissance d'émission du terminal mobile dans l'état de mise en veille est supérieure à la puissance d'émission du terminal mobile dans l'état de mise en veille théorique, avertir un utilisateur qu'il existe un risque de fuite malveillante d'informations dans un état actuel ;
dans lequel,
le module de surveillance en temps réel (11) comprend : une unité de surveillance de canal (111), un registre (112), une unité d'évaluation d'état de mise en veille (113), une unité de calcul de puissance (114) et une unité d'émission (115), dans lequel :
l'unité de surveillance de canal (111) est configurée pour : surveiller un état actif de chaque canal du terminal mobile en temps réel, et sauvegarder l'état actif de chaque canal du terminal mobile dans le registre (112) ;
le registre (112) est configuré pour : sauvegarder l'état actif de chaque canal du terminal mobile envoyé par l'unité de surveillance de canal ;
l'unité d'évaluation d'état de mise en veille (113) est configurée pour : lire l'état actif de chaque canal du terminal mobile dans le registre (112), et déterminer si le terminal mobile se trouve ou non dans l'état de mise en veille selon l'état actif de chaque canal ;
l'unité de calcul de puissance (114) est configurée pour : lorsque l'unité d'évaluation d'état de mise en veille (113) détermine que le terminal mobile se trouve dans l'état de mise en veille, calculer la puissance d'émission du terminal mobile dans l'état de mise en veille ; l'unité d'émission (115) est configurée pour : notifier le module de comparaison (12) et le module de mémoire (14) de l'état de mise en veille du terminal mobile, et envoyer la puissance d'émission du terminal mobile dans l'état de mise en veille au module de comparaison (14) ; et le terminal mobile est un terminal mobile WCDMA, accès multiple par répartition en code à large bande.

2. Le système de la revendication 1, dans lequel :
le module de surveillance en temps réel (11) est configuré pour surveiller un état de mise en veille du terminal mobile et une puissance d'émission dans l'état de mise en veille en temps réel d'une manière suivante :
la surveillance d'un état actif de chaque canal du terminal mobile en temps réel, la détermination de savoir si le terminal mobile se trouve ou non dans l'état de mise en veille selon l'état actif de chaque canal, et le calcul de la puissance d'émission du terminal mobile dans l'état de mise en veille lorsque le terminal mobile se trouve dans l'état de mise en veille.

3. Le système de la revendication 1, comprenant en outre un module de mémoire (14) connecté respectivement au module de surveillance en temps réel (11) et au module de comparaison (12), dans lequel :
le module de surveillance en temps réel (12) est en outre configuré pour : notifier le module de mémoire de l'état de mise en veille ;
le module de mémoire (14) est configuré pour : après réception d'une notification provenant du module de surveillance en temps réel (11), envoyer la puissance d'émission du terminal mobile dans l'état de mise en veille théorique sauvegardé par le module de mémoire (14) au module de comparaison (12) ; et
le module de comparaison (12) est en outre configuré pour : recevoir la puissance d'émission du terminal mobile dans l'état de mise en veille théorique envoyé par le module de mémoire (14), et comparer la puissance d'émission du terminal mobile dans l'état de mise en veille avec la puissance d'émission du terminal mobile dans l'état de mise en veille théorique.

4. Le système de la revendication 1, dans lequel :
le module d'avertissement de logiciel (11) est en outre configuré pour : lorsque le résultat de comparaison est que la puissance d'émission du terminal mobile dans l'état de mise en veille est inférieure ou égale à la puissance d'émission du terminal mobile dans l'état de mise en veille théorique fourni par le module de mémoire (14), ne pas avertir un utilisateur qu'il existe un danger de fuite malveillante d'informations dans l'état actuel.

5. Une méthode pour empêcher un terminal mobile de télécharger anormalement vers l'amont des informations, comprenant :
la surveillance d'un état de mise en veille du terminal mobile et d'une puissance d'émission dans l'état de mise en veille en temps réel (S101), lorsque le terminal mobile se trouve dans l'état de mise en veille, la comparaison de la puissance d'émission du terminal mobile dans l'état de mise en veille avec une puissance d'émission du terminal mobile dans un état de mise en veille théorique (S102), lorsque la puissance d'émission du terminal mobile dans l'état de mise en veille est supérieure à la puissance d'émission du terminal mobile dans l'état de mise en veille théorique, l'avertissement d'un utilisateur qu'il existe un danger de fuite malveillante de message dans un état actuel (S103) ;
dans laquelle :
l'étape consistant à surveiller l'état de mise en veille du terminal mobile et la puissance d'émission dans l'état de mise en veille en temps réel comprend :
la surveillance d'un état actif de chaque canal du terminal mobile en temps réel, la détermination de savoir si le terminal mobile se trouve ou non dans l'état de mise en veille selon l'état actif de chaque canal, et le calcul de la puissance d'émission du terminal mobile dans l'état de mise en veille lorsque le terminal mobile se trouve dans l'état de mise en veille ; et le terminal mobile est un terminal mobile WCDMA, accès multiple par répartition en code à large bande.

6. La méthode de la revendication 5, comprenant en outre :
lorsque la puissance d'émission du terminal mobile dans l'état de mise en veille est inférieure ou égale à la puissance d'émission du terminal mobile dans l'état de mise en veille théorique, ne pas avertir un utilisateur qu'il existe un danger de fuite malveillante d'informations dans l'état actuel.
